# EUROPEAN PATENT SPECIFICATION

(11) **EP 1 952 208 B1**
(45) Date of publication and mention of the grant of the patent: **06.03.2013**
(21) Application number: 05857407.0
(22) Date of filing: 25.11.2005
(51) Int. Cl.: G05B 19/042, G05B 19/418, H04L 29/08, G05B 19/05, H04L 29/00

(54) **METHOD AND APPARATUS FOR REDUCING SERVER WORKLOAD IN AN AUTOMATION SYSTEM**
VERFAHREN UND VORRICHTUNG ZUM VERRINGERN DER SERVERARBEITSLAST IN EINEM AUTOMATISIERUNGSSYSTEM
PROCÉDÉ ET APPAREIL POUR RÉDUIRE UNE CHARGE DE TRAVAIL DE SERVEUR DANS UN SYSTÈME D'AUTOMATISATION

(43) Date of publication of application: 06.08.2008
(73) Proprietor: SIEMENS AKTIENGESELLSCHAFT, 80333 München (DE)
(72) Inventor: KASSOU, Ahmad-Ramez Madjed, St. Petersburg, 193318 (RU); MARTSINOVSKY, Georgy Artemievich, St. Petersburg, 194017 (RU); PIWINGER, Boris, A-1070 Wien (AT)
(86) International application number: PCT/RU2005/000604
(87) International publication number: WO 2007/061330

(56) References cited:
- EP-A- 1 256 861
- US-A1- 2004 006 624
- US-B1- 6 963 917

## Description

The invention relates to an automation system for controlling and/or regulating a technical process in line with the precharacterizing part of claim 1. Furthermore, the invention relates to a method for transmitting data between an automation device and a remote device via the World Wide Web.

An automation system based on the precharacterizing part of claim 1 is known from EP 1 256 861 B1. In that publication, a web access module with a web server is provided which has an internet interface and a plurality of control device interfaces. The internet interface can have a remote device connected to it via the internet, and the control device interfaces can each have a control apparatus connected to them. The data transmission between the remote device and all the control devices is performed via the web server, which means a heavy communication load for the web server.

The present invention is based on the object of providing an automation system of the aforementioned type which is used to reduce the communication load between a remote device and an automation device. It is also the intention to specify a web access module which is suitable for such an automation device. Furthermore, the intention is to specify a method for transmitting data between a remote device and an automation device which simplifies the data transmission.

This object is achieved for the automation system by the measures indicated in the characterizing part of claim 1, and for the method by the measures indicated in the characterizing part of claim 7.

Preferable embodiments of the invention can be found in the dependent claims.

The fact that the at least one portion of the web server which is required for handling a data request is loaded into the respective automation device only in the event of a data request means that both the communication load for the data transmission between the remote device and the respective automation device and the loading on the respective automation device itself are reduced. In addition, the memory in the respective automation device can be reduced in terms of storage capacity so as to be able to save only the required portion of the web server.

In one preferable embodiment of the invention, the web access module is part of an application server or of a firewall server. This means that the web server can be saved centrally together with one or more control programs for controlling a technical process, and this allows simple updating of these programs. Application servers are known per se. Usually, an application server is a server for application programs which executes applications used by a large number of clients, e.g. clients in the form of automation devices. The application server may be provided with suitable means which allow, by way of example, only licensed and/or authorized access operations to the automation devices.

Particular protection against unauthorized access operations to the automation devices and to production sites can be provided by virtue of the web access module being part of an inherently known firewall server which prevents unauthorized parties, for example, from transmitting data to the automation devices.

The web pages can be saved either on the respective automation device or on the application or firewall server. If the web pages are stored on the automation device, the web pages are updated prior to further processing by the application or firewall server. If the web pages are stored on the application or firewall server, the at least one portion of the web server or of the web server instance is transmitted together with the web pages to the respective automation device.

In one further embodiment of the invention, the web access module has a directory which stores an identifier for the automation device and a version number for the at least one portion of the web server which can be saved in the automation device. This allows the web access module to check which version of the at least one portion of the web server needs to be loaded into the automation device by the web access module in order to ensure a trouble-free communication between the remote device and the automation device. This is because it is necessary to ensure that the at least one portion of the web server is actually able to run on the hardware of the automation device.

In still another embodiment of the invention, the automation device transmits the version number of the at least one portion of the web server to the web access module. If the web access module recognizes that the version number saved in the automation device does not match the current version number saved in.the web access module, the web access module updates the at least one portion of the web server in the automation device. This involves first of all checking whether the new version is actually suitable for this hardware. This ensures that the automation device is always provided with the current, executable software level.

The fact that the web access module deletes the at least one portion of the web server which is saved in the automation device when the data transmission has concluded means that the memory in the automation device can be used for other applications.

In a further embodiment of the invention, the at least one portion of the web server is saved in the automation device, e.g. during the latter's startup phase, so as to be resident. This reduces the communication load, with the at least one portion of the web server being loaded into the automation device only in order to update it.

The automation device can be provided with a communication port which is implemented in hardware or in software and which has an inherently known "thread demon". This allows the at least one portion of the web server or of the web server instance of the application server to be received.

The mechanism for loading the at least one portion of the web server or of the web server instance into the automation device can be produced either as part of an RTOS operating system or a "real time virtual machine", e.g. a "Java Virtual Machine".

The invention, its refinements and advantages are explained in more detail below with reference to the drawing, which illustrates an exemplary embodiment of the invention.

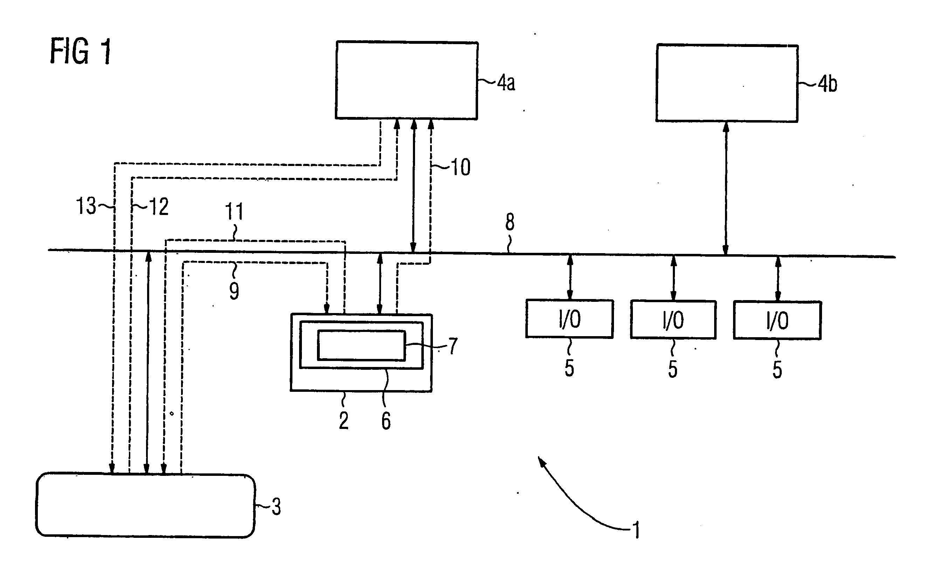

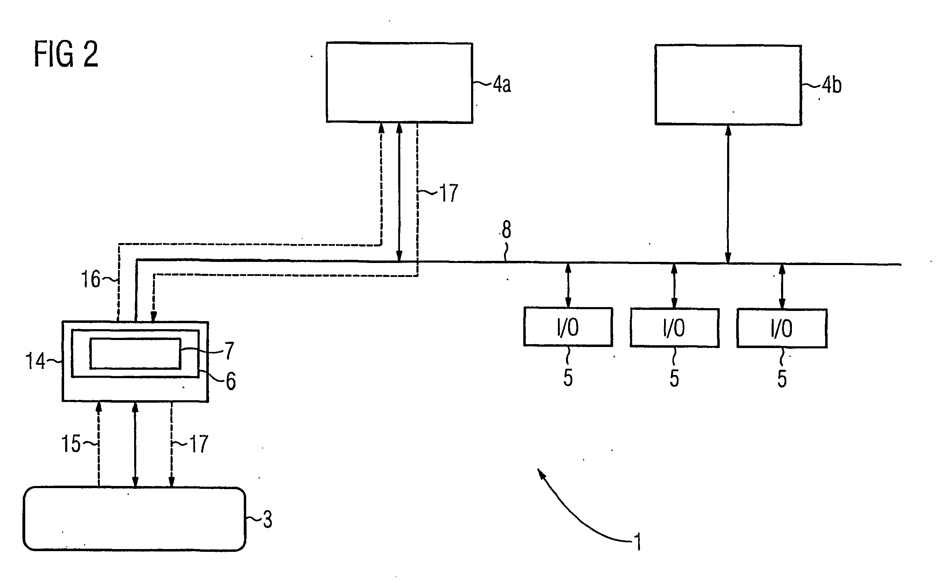

- Figures 1 and 2: show simplified illustrations of an automation system.

In Figure 1, 1 denotes an automation system which has an application server 2, a remote device 3 and also a plurality of automation devices in the form of programmable logic controllers (PLCs) 4a, 4b and intelligent input/output units 5. It should be understood that the automation system 1 can have a.plurality of remote devices, e.g. remote devices in the form of inherently known personal computers which are respectively provided with a suitable internet browser program. A web access module 6 which is stored on the application server 2 and which is provided with a web server 7 allows data transmission between the remote device 3 and the automation devices 4a, 4b, 5, with a communication link 8 connecting the remote device 3 to the application server 2 and to the automation devices 4a, 4b, 5. It should be understood that it is possible to connect the remote device 3 and the application server 2 just to one of the automation devices 4a, 4b, 5, e.g. to the automation device 4a, via the communication link 8, with this automation device 4a being connected via a further communication link to the rest of the automation devices 4b, 5, and the automation devices 4a, 4b, 5 being provided with suitable hardware and software interfaces for correct communication between the automation devices 4a, 4b, 5.

The application server 2 can be used to save a multiplicity of web applications and other application programs. By way of example, the application server 2 has a piece of programming software saved on it for creating a control program which is provided for controlling a technical process and which can be executed on one or more of the automation devices 4a, 4b, 5. This programming software can be loaded into the remote device 3 in order to create control programs or in order to modify control programs which have already been created. Modification of one or more control programs is required particularly if changes need to be made to the technical process for control or to the industrial installation for control.

To allow correct data interchange, the web access module 6 has a directory in which an identifier is saved for each automation device 4a, 4b, 5. The web server 7 is in the form of an object-oriented software component, with web server instances being stored in the web access module 6 in addition to this component. Which instance is suitable for which automation device 4a, 4b, 5 is likewise stored in the directory.

In the following it is assumed that data transmission is intended to take place between the remote device 3 and the automation device 4a. To this end, the remote device 3 initially sends the application server 2 a data request 9 in the form of an "HTTP request". On the basis of the evaluation of this data request 9, the web access module 6 recognizes that communication is intended to take place between the remote device 3 and the automation device 4a, and then transmits a web server instance associated with this automation device 4a, or at least one portion of this web server instance which is required for handling the data request. It is assumed below that an associated web server instance 10 is transmitted. The automation device 4a saves this instance in a memory in the automation device 4a. In addition, the web access module 6 indicates to the remote device 3 that the web server instance 10 has been loaded into the automation device 4a. This can be done, by way of example, by virtue of the web access module 6 supplying the remote device 3 with the data request 9 in the form of an acknowledgement 11. In a subsequent step, the remote device 3 transmits the data request 9 in the form of a fresh data request 12 to the automation device 4a, on the basis of which the web server instance 10 saved in the automation device 4a supplies the remote device 3 with requested data 13, e.g. with the requested web pages.

Data transmission between the remote device 3 and the automation device 4a can also be effected such that, when a data request has been received by the remote device 3, the web access module 6 saves the web server instance associated with this automation device 4a in the automation device 4a together with this data request. For a more detailed explanation, reference is subsequently made in this regard to Figure 2, wherein identical parts in Figures 1 and 2 have been provided with the same reference numbers. The remote device 3 sends to an application server, which in the present example is part of a firewall server 14, a data request 15 which the web access module 6 takes as a basis for supplying the web server instance together with the data request 15 in the form of a data stream 16 to the automation device 4a. From the data stream 16, the automation device 4a ascertains the web server instance and the data request 15, implements the web server instance and, following this implementation, handles the data request 15, as a result of which the web server instance transmits requested data 17 via the application server to the remote device 3.

## Claims

1. An automation system which is provided for controlling and/or regulating a technical process, having a web access module (6) which has a web server (7) and which is connected via a communication link (8) to at least one automation device (4a, 4b, 5) and to at least one remote device (3), the web access module (6) allowing data transmission between the at least one automation device (4a, 4b, 5) and the at least one remote device (3), **characterized in that**
- in the event of a data request the web access module (6) transmits a web server instance associated with this automation device (4a, 4b, 5) or at least one portion of this web server instance which is required for handling the data request, and
- said web server instance or said at least one portion of this web server instance transmits the data to the remote device (3).

2. The automation system as claimed in claim 1,
**characterized in that** the web access module (6) is part of an application server (2) or of a firewall server (14).

3. The automation system as claimed in claim 1 or 2,
**characterized in that** the web access module (6) has a directory which stores an identifier for the automation device (4a, 4b, 5) and a version number for the at least one portion of the web server (7) which can be saved in the automation device (4a, 4b, 5).

4. The automation system as claimed in claim 3,
**characterized in that** the automation device (4a, 4b, 5) transmits the version number of the at least one portion of the web server (7) to the web access module (6), with the web access module updating the at least one portion of the web server (7) in the automation device (4a, 4b, 5) if the version number saved in the automation device (4a, 4b, 5) does not match a current version number saved in the web access module (6).

5. The automation system as claimed in one of claims 1 to 4, **characterized in that** the web access module (6) deletes the at least one portion of the web server (7) which is saved in the automation device (4a, 4b, 5) when the data transmission has concluded.

6. The automation system as claimed in one of claims 1 to 4, **characterized in that** the at least one portion of the web server (7) is saved in the automation device (4a, 4b, 5) so as to be resident.

7. A method for transmitting data between an automation device (4a, 4b, 5) and a remote device (3), where a web access module (6) provided with a server (7) is provided for the purpose of data transmission, **characterized in that**
- in the event of a data request the web access module (6) transmits a web server instance associated with this automation device (4a, 4b, 5) or at least one portion of this web server instance which is required for handling the data request, and
- said web server instance or said at least one portion of this web server instance transmits the data to the remote devices (3).

8. The method as claimed in claim 7, **characterized in that**
- a directory is saved in the web access module (6), said directory having an entry for an identifier for the automation device (4a, 4b, 5) and an entry for a version number for the at least one portion of the web server (7) which is stored in the automation device (4a, 4b, 5),
- the automation device (4a, 4b, 5) transmits the version number to the web access module (6), with the web access module (6) updating the at least one portion of the web server (7) in the automation device (4a, 4b, 5) if the version number saved in the automation device (4a, 4b, 5) does not match a current version number saved in the web access module (6).

9. The method as claimed in claim 7 or 8, **characterized in that** the at least one portion of the web server (7) which is saved in the automation device (4a, 4b, 5) is deleted when the data transmission has concluded.

## Patentansprüche

1. Automatisierungseinrichtung, welche zum Steuern und/oder Regeln eines technischen Prozesses vorgesehen ist, mit einem Webzugangsmodul (6), welches einen Webserver (7) aufweist und welches über eine Kommunikationsverbindung (8) mit mindestens einem Automatisierungsgerät (4a, 4b, 5) und mit mindestens einer Remote-Vorrichtung (3) verbunden ist, wobei das Webzugangsmodul (6) eine Datenübermittlung zwischen dem mindestens einen Automatisierungsgerät (4a, 4b, 5) und der mindestens einen Remote-Vorrichtung (3) ermöglicht, **dadurch gekennzeichnet, dass**
- das Webzugangsmodul (6) im Falle einer Datenanforderung (9, 15) eine Webserver-Instanz oder zumindest einen Teil der Webserver-Instanz, welcher zur Bearbeitung der Datenanforderung (9, 15) erforderlich ist, in das Automatisierungsgerät (4a, 4b, 5) übermittelt,
- die Webserver-Instanz oder der zumindest eine Teil der Webserver-Instanz die Daten der Remote-Vorrichtung (3) übermittelt.

2. Automatisierungseinrichtung nach Anspruch 1, **dadurch gekennzeichnet, dass** das Webzugangsmodul (6) Bestandteil eines Applikationsservers (2) oder eines Firewall-Servers (14) ist.

3. Automatisierungseinrichtung nach Anspruch 1 oder 2, **dadurch gekennzeichnet, dass** das Webzugangsmodul (6) ein Verzeichnis aufweist, in welchem eine Kennung des Automatisierungsgeräts (4a, 4b, 5) und eine Versionsnummer des im Automatisierungsgerät (4a, 4b, 5) hinterlegbaren zumindest einen Teils des Webservers (7) gespeichert sind.

4. Automatisierungseinrichtung nach Anspruch 3, **dadurch gekennzeichnet, dass** das Automatisierungsgerät (4a, 4b, 5) dem Webzugangsmodul (6) die Versionsnummer des zumindest einen Teils des Webservers (7) übermittelt, wobei das Webzugangsmodul den zumindest einen Teil des Webservers (7) im Automatisierungsgerät (4a, 4b, 5) aktualisiert, falls die im Automatisierungsgerät (4a, 4b, 5) hinterlegte Versionsnummer nicht mit einer im Webzugangsmodul (6) hinterlegten aktuellen Versionsnummer übereinstimmt.

5. Automatisierungseinrichtung nach einem der Ansprüche 1 bis 4, **dadurch gekennzeichnet, dass** das Webzugangsmodul (6) nach Abschluss der Datenübermittlung den im Automatisierungsgerät (4a, 4b, 5) hinterlegten zumindest einen Teil des Webservers (7) löscht.

6. Automatisierungseinrichtung nach einem der Ansprüche 1 bis 4, **dadurch gekennzeichnet, dass** der zumindest eine Teil des Webservers (7) resident im Automatisierungsgerät (4a, 4b, 5) hinterlegt wird.

7. Verfahren zur Übermittlung von Daten zwischen einem Automatisierungsgerät (4a, 4b, 5) und einer Remote-Vorrichtung (3), wobei ein mit einem Webserver (7) versehenes Webzugangsmodul (6) zur Datenübermittlung vorgesehen ist, **dadurch gekennzeichnet, dass**
- im Falle einer Datenanforderung (9, 15) eine Webserver-Instanz oder zumindest ein Teil der Webserver-Instanz, welcher zur Bearbeitung der Datenanforderung (9, 15) erforderlich ist, in das Automatisierungsgerät (4a, 4b, 5) hinterlegt wird,
- die Daten durch die Webserver-Instanz oder durch den zumindest einen Teil der Webserver-Instanz der Remote-Vorrichtung (3) übermittelt werden.

8. Verfahren nach Anspruch 7, **dadurch gekennzeichnet, dass**
- in das Webzugangsmodul (6) ein Verzeichnis hinterlegt wird, in welchem eine Kennung des Automatisierungsgeräts (4a, 4b, 5) und eine Versionsnummer des im Automatisierungsgerät (4a, 4b, 5) gespeicherten zumindest einen Teils des Webservers (7) eingetragen sind,
- durch das Automatisierungsgerät (4a, 4b, 5) dem Webzugangsmodul (6) die Versionsnummer übermittelt wird, wobei durch das Webzugangsmodul (6) der zumindest eine Teil des Webservers (7) im Automatisierungsgerät (4a, 4b, 5) aktualisiert wird, falls die im Automatisierungsgerät (4a, 4b, 5) hinterlegte Versionsnummer nicht mit einer im Webzugangsmodul (6) hinterlegten aktuellen Versionsnummer übereinstimmt.

9. Verfahren nach Anspruch 7 oder 8, dass nach Abschluss der Datenübermittlung der im Automatisierungsgerät (4a, 4b, 5) hinterlegte zumindest eine Teil des Webservers (7) gelöscht wird.

## Revendications

1. Système d'automatisation qui est prévu pour commander et/ou réguler une opération technique, ayant un module ( 6 ) d'accès à la toile qui a un serveur ( 7 ) de toile et qui est relié par l'intermédiaire d'une liaison ( 8 ) de communication à au moins un dispositif ( 4a, 4b, 5 ) d'automatisation et à au moins un dispositif ( 3 ) à distance, le module ( 6 ) d'accès à la toile permettant une transmission de données entre le au moins un dispositif ( 4a, 4b, 5 ) d'automatisation et le au moins un disposition ( 3 ) à distance, **caractérisé en ce que**
- dans le cas d'une demande de données le module ( 6 ) d'accès à la toile transmet une instance de serveur de toile associée à ce dispositif ( 4a, 4b, 5 ) d'automatisation ou au moins une partie de cette instance de serveur de toile, qui est nécessaire pour traiter la demande de données et
- l'instance de serveur de toile ou la au moins une partie de cette instance de serveur de toile transmet la donnée au dispositif ( 3 ) à distance.

2. Système d'automatisation suivant la revendication 1, **caractérisé en ce que** le module ( 6 ) d'accès à la toile fait partie d'un serveur ( 2 ) d'application d'un serveur ( 14 ) coupe-feux.

3. Système d'automatisation suivant la revendication 1 ou 2, **caractérisé en ce que** le module ( 6 ) d'accès à la toile a un répertoire qui mémorise un identificateur du dispositif ( 4a, 4b, 5 ) d'automatisation et un numéro de version de la au moins une partie du serveur ( 7 ) de toile, qui peut être sauvegardée dans le dispositif ( 4a, 4b, 5 ) d'automatisation.

4. Système d'automatisation suivant la revendication 3,
**caractérisé en ce que** le dispositif ( 4a, 4b, 5 ) d'automatisation transmet le numéro de version de la au moins une partie du serveur ( 7 ) de toile au module ( 6 ) d'accès à la toile, le module d'accès à la toile mettant à jour la au moins une partie du serveur ( 7 ) de toile dans le dispositif ( 4a, 4b, 5 ) d'automatisation si le numéro de version sauvegardé dans le dispositif ( 4a, 4b, 5 ) d'automatisation ne correspond pas à un numéro de version présent sauvegardé dans le module ( 6 ) d'accès à la toile.

5. Système d'automatisation suivant l'une des revendications 1 à 4,
**caractérisé en ce que** le module ( 6 ) d'accès à la toile supprime la au moins une partie du serveur ( 7 ) de toile, qui est sauvegardée dans le dispositif ( 4a, 4b, 5 ) d'automatisation, lorsque la transmission de données s'est achevée.

6. Système d'automatisation suivant l'une des revendications 1 à 4,
**caractérisé en ce que** la au moins une partie du serveur ( 7 ) de toile est sauvegardée dans le dispositif ( 4a, 4b, 5 ) d'automatisation de manière à être résidente.

7. Procédé de transmission de données entre un dispositif ( 4a, 4b, 5 ) d'automatisation et un dispositif ( 3 ) à distance, dans lequel un module ( 6 ) d'accès à la toile pourvu d'un serveur ( 7 ) est prévu aux fins de transmission de données, **caractérisé en ce que**
- dans le cas d'une demande de données, le module ( 6 ) d'accès à la toile transmet une instance de serveur de toile associée à ce dispositif ( 4a, 4b, 5 ) d'automatisation ou au moins une partie de cette instance de serveur de toile, qui est nécessaire pour traiter la demande de données et
- l'instance de serveur de toile ou la au moins une partie de cette instance de serveur de toile transmet la données au dispositif ( 3 ) à distance.

8. Procédé suivant la revendication 7, **caractérisé en ce que**
- un répertoire est sauvegardé dans le module ( 6 ) d'accès à la toile, le répertoire ayant une entrée pour un identificateur du dispositif ( 4a, 4b, 5 ) d'automatisation et une entrée pour un numéro de version de la au moins une partie du serveur ( 7 ) de toile, qui est mémorisée dans le dispositif ( 4a, 4b, 5 ) d'automatisation,
- le dispositif ( 4a, 4b, 5 ) d'automatisation transmet le numéro de version au module (6) d'accès à la toile, le module ( 6 ) d'accès à la toile mettant à jour la au moins une partie du serveur ( 7 ) de toile dans le dispositif ( 4a, 4b, 5 ) d'automatisation, si le numéro de version sauvegardé dans le dispositif ( 4a, 4b, 5 ) d'automatisation ne correspond pas à un numéro de version présent sauvegardé dans le module ( 6 ) d'accès à la toile.

9. Procédé suivant la revendication 7 ou 8, **caractérisé en ce que** la au moins une partie du serveur ( 7 ) de toile, qui est sauvegardée dans le dispositif ( 4a, 4b, 5 ) d'automatisation, est supprimée lorsque la transmission de données s'est achevée.
